# EUROPÄISCHE PATENTANMELDUNG

(11) **EP 4 455 933 A1**
(43) Veröffentlichungstag der Anmeldung: **30.10.2024**
(21) Anmeldenummer: 24166041.4
(22) Anmeldetag: 25.03.2024
(51) Int. Cl.: G06K 7/10

(54) **BAURAUMSPARENDE SCANNEREINHEIT**

(30) Priorität: 26.04.2023 DE 102023110770
(71) Anmelder: WIPOTEC GmbH, 67657 Kaiserslautern (DE)
(72) Erfinder: Anders, Daniel, 67574 Osthofen (DE); Schulz, Stefan, 67661 Kaiserslautern-Siegelbach (DE)
(74) Vertreter: Eder Schieschke & Partner mbB

(57) **Zusammenfassung**

Die Erfindung betrifft eine Scannereinheit zur optischen Erfassung der Kennzeichnung eines Produkts, wobei sich die Scannereinheit in einer Längsrichtung X, einer dazu orthogonalen Querrichtung Y und einer zu diesen beiden Richtungen orthogonalen Höhenrichtung Z erstreckt, umfassend wenigstens eine Lichtquelle, einen Kameraabschnitt, einen Umlenkabschnitt und einen Verbindungsabschnitt zwischen dem Kameraabschnitt und dem Umlenkabschnitt, wobei die wenigstens eine Lichtquelle zum Aussenden eines auf das Produkt gerichteten Lichtes dient, so dass das Licht auf eine Lesezone des Produkts fällt, wobei der Umlenkabschnitt einen Umlenkspiegel aufweist, wobei der Umlenkspiegel von der Lesezone kommendes Licht durch den Verbindungsabschnitt entgegen der Längsrichtung X zum Kameraabschnitt umlenkt, wobei der Kameraabschnitt eine Kamera mit einem Objektiv zur Erfassung des von dem Umlenkspiegel umgelenkten und durch den Verbindungsabschnitt zur Kamera geführten Lichtes aufweist, dadurch gekennzeichnet, dass der Kameraabschnitt und der Verbindungsabschnitt eine unterschiedliche Erstreckung in Bezug auf deren Gehäuseaußenkontur in Höhenrichtung Z aufweisen, wobei die Erstreckung des Verbindungsabschnitts in Höhenrichtung Z wenigstens teilweise, vorzugsweise vollständig, geringer als die Erstreckung des Kameraabschnitts in Höhenrichtung Z ist Die erfindungsgemäße Scannereinheit wird zur optischen Erfassung der Kennzeichnung eines Produkts in einer Inspektionsvorrichtung verwendet.

## Beschreibung

Die vorliegende Erfindung betrifft eine Scannereinheit nach Patentanspruch 1, die aufgrund ihres modularen Aufbaus sehr platzsparend ist. Weiterhin betrifft die vorliegende Erfindung auch die Verwendung der erfindungsgemäßen Scannereinheit in einer Inspektionsvorrichtung zum Inspizieren der Kennzeichnung eines Produkts nach Patentanspruch 12 sowie die Inspektionsvorrichtung nach Patentanspruch 13, die eine erfindungsgemäße Scannereinheit enthält.

Zur Identifizierung von Produkten werden deren Verpackungen häufig mit Kennzeichnungen (z.B. Barcodes) versehen. Zum Zweck der Qualitätssicherung, Produktverteilung, Identifizierung oder Rückverfolgung werden diese Kennzeichnungen in den Produktionsanlagen mit Hilfe von Kameras kontrolliert. Wenn sich die Kennzeichnung auf der Produktunterseite befindet, so kann die Inspektion beispielsweise mit Hilfe einer Scannereinheit durch einen Rollenspalt zwischen zwei Förderbändern erfolgen. Hierfür ist es oft notwendig, in beispielsweise Inspektionsmaschinen, Schlauchbeutelmaschinen oder Füllmaschinen eine entsprechende Scannereinheit zu integrieren bzw. bestehende Maschinen nachzurüsten. Bei den Kennzeichnungen kann es sich um ein Etikett, um eine direkt aufgedruckte Kennzeichnung oder sonstige Markierungen handeln, die optisch gelesen werden können. Dies umfasst auch Kennzeichen, die mit dem sogenannten "Molding" in die Produktverpackung eingebracht werden, also optisch lesbare Merkmale, die beispielsweise nicht nur auf der Bodenoberfläche, sondern im Bodenmaterial selbst enthalten sind.

Da die Produkte in automatisierten Produktions- und Verteilanlagen oft mit Geschwindigkeiten von mehreren Metern pro Sekunde transportiert werden, muss auch das maschinelle Einlesen der auf den Produkten angebrachten Kennzeichnung mit entsprechend hoher Geschwindigkeit und Präzision erfolgen. Das Ablesen der Kennzeichnung darf dabei nicht durch äußere Umstände negativ beeinflusst werden, wie beispielsweise durch Verschmutzung des Lesegeräts.

Da die genannten Maschinen, wie Inspektionsmaschinen, oft viele Komponenten aufweisen, die einen gewissen Bauraum einnehmen, muss die Integration oder Nachrüstung einer Scannereinheit möglichst bauraumsparend erfolgen. Bisherige Scannereinheiten weisen oft einen sehr klobigen Bauraum auf und eignen sich deshalb nur bedingt für die Nachrüstung von den genannten Maschinen. Dies liegt daran, dass alle benötigten Komponenten meist in einem gemeinsamen Gehäuse angeordnet sind, was den Bauraumbedarf erhöht.

Es ist deshalb die Aufgabe dieser Erfindung, eine Scannereinheit zur optischen Erfassung der Kennzeichnung eines Produkts bereitzustellen, insbesondere von schnell bewegten Produkten, wobei die Scannereinheit möglichst platzsparend aufgebaut ist, so dass diese beispielsweise in Inspektionsmaschinen, Schlauchbeutelmaschinen oder Füllmaschinen bauraumsparend integriert werden kann, bzw. die genannten Maschinen mit der Scannereinheit bauraumsparend nachgerüstet werden können.

Hierfür stellt die vorliegende Erfindung eine Scannereinheit nach Patentanspruch 1 bereit, die modular aufgebaut ist und einen weitgehend an den Strahlengang angepassten Gehäuseaufbau aufweist, so dass von dieser möglichst wenig Platz eingenommen wird. Die vorliegende Erfindung betrifft auch die Verwendung der erfindungsgemäßen Scannereinheit in einer Inspektionsvorrichtung zum Inspizieren der Kennzeichnung eines Produkts nach Patentanspruch 12 sowie eine Inspektionsvorrichtung mit einer erfindungsgemäßen Scannereinheit nach Anspruch 13. Bevorzugte Ausführungsformen sind in den abhängigen Ansprüchen 1 bis 11 und 14 beschrieben.

In einer Ausgestaltung betrifft die vorliegende Erfindung eine Scannereinheit zur optischen Erfassung der Kennzeichnung eines Produkts, wobei sich die Scannereinheit in einer Längsrichtung X, einer dazu orthogonalen Querrichtung Y und einer zu diesen beiden Richtungen orthogonalen Höhenrichtung Z erstreckt. Die Scannereinheit umfasst wenigstens eine Lichtquelle, einen Kameraabschnitt, einen Umlenkabschnitt und einen Verbindungsabschnitt zwischen dem Kameraabschnitt und dem Umlenkabschnitt,
(a) wobei die wenigstens eine Lichtquelle zum Aussenden eines auf das Produkt gerichteten Lichtes dient, so dass das Licht auf eine Lesezone des Produkts fällt,
(b) wobei der Umlenkabschnitt einen Umlenkspiegel aufweist, wobei der Umlenkspiegel von der Lesezone kommendes Licht durch den Verbindungsabschnitt entgegen der Längsrichtung X zum Kameraabschnitt umlenkt,
(c) wobei der Kameraabschnitt eine Kamera mit einem Objektiv zur Erfassung des von dem Umlenkspiegel umgelenkten und durch den Verbindungsabschnitt zur Kamera geführten Lichtes aufweist,
dadurch gekennzeichnet, dass der Kameraabschnitt und der Verbindungsabschnitt eine unterschiedliche Erstreckung in Bezug auf deren Gehäuseaußenkontur in Höhenrichtung Z aufweisen, wobei die Erstreckung des Verbindungsabschnitts in Höhenrichtung Z wenigstens teilweise, vorzugsweise vollständig, geringer als die Erstreckung des Kameraabschnitts in Höhenrichtung Z ist.

Unter dem Ausdruck "vollständig geringer" soll hierin verstanden werden, dass die gesamte Gehäuseaußenkontur des Verbindungsabschnitts eine geringere Höhe als die Gehäuseaußenkontur des Kameraabschnitts aufweist. Dies ist letztlich auch die Variante, die erfindungsgemäß bevorzugt ist. Allerdings können außen am Verbindungsabschnitt Verstrebungen oder Verstärkungen angebracht sein, die zum Teil eine gleiche oder größere Höhe aufweisen als der Kameraabschnitt. Da sich diese Verstrebungen oder Verstärkungen jedoch nicht über die komplette Gehäuseaußenkontur des Verbindungsabschnitts, sondern nur über einen Teil dessen erstrecken, wird hierin der Ausdruck "wenigstens teilweise geringer" verwendet.

Weiterhin ist es in einer weiteren Ausgestaltung der erfindungsgemäßen Scannereinheit bevorzugt, dass der Kameraabschnitt, der Verbindungsabschnitt und der Umlenkabschnitt in Bezug auf die Längsrichtung X hintereinander angeordnet sind.

In einer weiteren Ausgestaltung der erfindungsgemäßen Scannereinheit ist es bevorzugt, dass der Kameraabschnitt, der Verbindungsabschnitt und der Umlenkabschnitt entweder ein gesamtmonolithisches Gehäuse oder wenigstens zwei unterschiedliche, modular verbundene Gehäuse aufweisen, wobei letzteres bevorzugt ist.

Sind Kameraabschnitt, Verbindungsabschnitt und Umlenkabschnitt in einem gesamtmonolithischen Gehäuse angeordnet, so sind alle drei Abschnitte in einem Gehäuse untergebracht, bei dem sich lediglich die Gehäuseaußenkontur derart ändert, dass die Erstreckung des Gehäusebereichs des Verbindungsabschnitts bezüglich seiner Gehäuseaußenkontur in Höhenrichtung Z wenigstens teilweise, vorzugsweise vollständig, geringer als die Erstreckung des Kameraabschnitts bezüglich seiner Gehäuseaußenkontur in Höhenrichtung Z ist. Bei dieser Variante bietet sich beispielsweise die Fertigung des Gehäuses durch 3D-Druck an.

Wie genannt können der Kameraabschnitt, der Verbindungsabschnitt und der Umlenkabschnitt wenigstens zwei unterschiedliche, modular verbundene Gehäuse aufweisen. Es können aber auch drei oder mehr unterschiedliche, modular verbundene Gehäuse vorliegen. Wenn drei oder mehr Gehäuse vorliegen, dann sind vorzugsweise jeweils ein Gehäuse für den Kameraabschnitt, den Verbindungsabschnitt und den Umlenkabschnitt vorgesehen. Liegen zwei Gehäuse vor, so ist vorzugsweise ein Gehäuse für zwei der Abschnitte vorgesehen. Bei der zuletzt genannten Variante ist es jedoch bevorzugt, dass das Gehäuse für den Kameraabschnitt und das Gehäuse für den Umlenkabschnitt verschiedene Gehäuse sind. Hierbei ist entweder das Gehäuse für den Kameraabschnitt oder das Gehäuse für den Umlenkabschnitt auch für den Verbindungsabschnitt vorgesehen. Die Verbindung der modular verbundenen Gehäuse erfolgt beispielsweise durch Anflanschung bzw. durch Verschraubung. Ist das Gehäuse für den Kameraabschnitt oder das Gehäuse für den Umlenkabschnitt auch für den Verbindungsabschnitt vorgesehen, so kann das gemeinsame Gehäuse für Kameraabschnitt und Verbindungsabschnitt, oder für Verbindungabschnitt und Umlenkabschnitt, beispielsweise durch 3D-Druck, hergestellt werden. Erfindungsgemäß besonders bevorzugt ist es, dass der Kameraabschnitt in einem ersten Gehäuse und der Verbindungsabschnitt und Umlenkabschnitt gemeinsam in einem zweiten Gehäuse vorgesehen sind, die modular miteinander verbunden sind. Das bzw. die Gehäuse für Kamera-, Verbindungs- und Umlenkabschnitt können aus allen denkbaren Materialien hergestellt sein, wobei ein Leichtmetall, wie Aluminium, beispielsweise aus Gründen der Gewichtseinsparung bevorzugt ist.

Die geringere Höhe der Gehäuseaußenkontur des Verbindungsabschnitts gegenüber der Gehäuseaußenkontur des Kameraabschnitts liegt an dem unterschiedlichen

Platzbedarf der verschiedenen Komponenten und hat den Vorteil, dass die erfindungsgemäße Scannereinheit bzw. deren Gehäuse nur maximal so viel Platz einnehmen, wie sie aus technischen Gründen benötigen. So erfordert der Kameraabschnitt mehr Platz in Höhenrichtung Z, da dort eine Kamera mit einem Objektiv untergebracht werden muss. Der Verbindungsabschnitt benötigt in der Regel - zumindest in einer Raumrichtung (hier Höhenrichtung Z) - nicht so viel Raum, da darin nur das vom Umlenkspiegel umgelenkte Licht geführt werden muss, das meist nur eine geringe Höhenausdehnung hat, da die eingelesenen Kennzeichnungen meist nur Informationen (beispielsweise Barcodes) im Wesentlichen entlang einer Raumrichtung (hier vorzugsweise Querrichtung Y) aufweisen.

In einer weiteren Ausgestaltung der erfindungsgemäßen Scannereinheit ist es bevorzugt, dass das von dem Umlenkspiegel umgelenkte und durch den Verbindungsabschnitt zur Kamera geführte Licht als Lichtstreifen vorliegt, der zumindest auf der dem Umlenkabschnitt zugewandten Seite des Verbindungsabschnitts eine größere räumliche Ausdehnung in der Querrichtung Y als in der Höhenrichtung Z aufweist. Auf diese Weise kann das Gehäuse des Verbindungsabschnitts in Bezug auf die Höhenrichtung Z flach ausgebildet werden. Ebenso bevorzugt ist es deshalb, dass der Umlenkspiegel eine längliche Erstreckung in der Querrichtung Y aufweist, um das Licht des Lichtstreifens in Richtung der Kamera umzulenken. Ebenso bevorzugt ist es deshalb, als Kamera eine Zeilenkamera mit einem Zeilensensor einzusetzen.

In einer weiteren Ausgestaltung der erfindungsgemäßen Scannereinheit ist es bevorzugt, dass die Erstreckung der Gehäuseaußenkontur des Verbindungsabschnitts in Höhenrichtung Z unter Vernachlässigung etwaiger Verstrebungen im Wesentlichen konstant ist. Unter "unter Vernachlässigung etwaiger Verstrebungen" soll hierin verstanden werden, dass die Gehäuseaußenkontur ohne die Verstrebungen das genannte Merkmal erfüllt. Unter "im Wesentlichen konstant" soll hierin verstanden werden, dass auch Abweichungen mancher Bereiche der Gehäuseaußenkontur des Verbindungsabschnitts um maximal 10 %, bevorzugt maximal 5 %, von der durchschnittlichen Erstreckung in Höhenrichtung Z akzeptabel sind.

In einer weiteren Ausgestaltung der erfindungsgemäßen Scannereinheit ist es bevorzugt, dass die Erstreckung der Gehäuseaußenkontur des Verbindungsabschnitts in Querrichtung Y hin zu dem Kameraabschnitt, vorzugsweise linear, abnimmt, vorzugsweise derart, dass die Gehäuseaußenkontur des Verbindungsabschnitts in Querrichtung Y im Wesentlichen dem Öffnungswinkel des Objektivs der Kamera entspricht. Eine solche Abnahme der Erstreckung der Gehäuseaußenkontur des Verbindungsabschnitts in Querrichtung Y ist möglich, da das Objektiv einen Öffnungswinkel aufweist, der das von dem Umlenkspiegel in Richtung Kamera umgelenkte Licht einfängt. Da ein Winkel eine lineare Zunahme bzw. Abnahme voraussetzt, ist es hier bevorzugt, dass die Breite der Gehäuseaußenkontur linear (Querrichtung Y) abnimmt. In anderen Worten weist der Verbindungsabschnitt im Bezug auf seine Gehäuseaußenkontur mit Blick entgegen der Höhenrichtung Z eine Trapezform auf, mit der schmäleren Seite in Richtung des Kameraabschnitts. Auf diese Weise wird der Platzbedarf des Verbindungsabschnitts auf ein Minimum reduziert. Die räumliche Erstreckung des Verbindungselements in Längsrichtung X ist dabei abhängig von der gewünschten Breite der Erfassung einer Kennzeichnung in Querrichtung Y, d.h. ausgehend von einer konstanten Brennweite einer (unveränderten) Optik muss die räumliche Erstreckung des Verbindungselements in Längsrichtung umso größer gewählt werden, je größer die Breite der Erfassung einer Kennzeichnung in Querrichtung Y ist. Auf diese Weise kann die Auflösung eines Kamerasensors jeweils optimal ausgenutzt werden.

In einer weiteren Ausgestaltung der erfindungsgemäßen Scannereinheit ist es bevorzugt, dass der Umlenkabschnitt eine Öffnung, die vorzugsweise spaltförmig ist, aufweist, die derart ausgestaltet ist, dass das von der Lesezone kommende Licht auf den Umlenkspiegel auftrifft, und wobei der Umlenkabschnitt abgesehen von der Öffnung lichtdicht abgeschlossen ist. Die Öffnung des Umlenkabschnitts, bzw. des Gehäuse(teil)s des Umlenkabschnitts, gewährleistet, dass das von der Lesezone kommende Licht über den Umlenkspiegel von der Kamera detektiert werden kann. Die ansonsten lichtdichte Abgeschlossenheit des Umlenkabschnitts, bzw. des Gehäuse(teil)s des Umlenkabschnitts zusammen mit dem lichtdichten Gehäuseteil des Verbindungsabschnnitts, stellt sicher, dass kein Fremdlicht oder Streulicht die optische Erfassung der Kennzeichnung beeinflusst. Die räumliche Erstreckung des Umlenkabschnitts in Querrichtung Y, bzw. dessen Gehäuseaußenkontur in Querrichtung Y, ist abhängig von der Breite des Transportsystems bzw. von der Breite der Produkte. Dies liegt daran, dass der Umlenkspiegel von dem Gehäuse des Umlenkabschnitts umschlossen sein muss, und selbst über die komplette Breite eines Transportsystems bzw. die Breite des Produktes eine Kennzeichnung erfassen können muss.

In einer weiteren Ausgestaltung der erfindungsgemäßen Scannereinheit ist es bevorzugt, dass der im Umlenkabschnitt vorhandene Umlenkspiegel justierbar ist. Dabei kann der Umlenkspiegel in eine bestimmte Umlenkrichtung manuell oder mittels einer Steuereinheit eingestellt werden. Dies dient dazu, das von der Lesezone kommende Licht so auf die Kamera auszurichten, dass dieses entlang der optischen Richtung der Kamera auf den Kamerasensor einfällt.

In einer weiteren Ausgestaltung der erfindungsgemäßen Scannereinheit ist es bevorzugt, dass die wenigstens eine Lichtquelle an dem Umlenkabschnitt, vorzugsweise justierbar, angeordnet ist. Die justierbare Anordnung hat den Vorteil, dass die wenigstens eine Lichtquelle entsprechend auf die Kennzeichnung des Produkts ausgerichtet werden kann. Als Lichtquellen können alle bekannten optischen Beleuchtungen verwendet werden, wie bspw. LEDs, Laserlicht, Infrarotlampen oder UV-Lampen.Vorzugsweise ist die mindestens eine Lichtquelle ein Modul aus mehreren Lampen, vorzugsweise LEDs, die räumlich gesehen nebeneinander in Reihe, vorzugsweise entlang der Querrichtung Y, angeordnet sind. Hierbei werden in einer Lichtquelle vorzugsweise 6 bis 8 Lampen nebeneinander angeordnet. Die Breite der Lichtquelle mit den nebeneinander angeordneten Lampen wird hierbei vorzugsweise in Abhängigkeit von der Breite eines zu beleuchtenden Transportsystems und/oder der Produktbreite gewählt.

In einer weiteren Ausgestaltung der erfindungsgemäßen Scannereinheit ist es bevorzugt, dass die wenigstens eine Lichtquelle außerhalb des/der Gehäuse angeordnet ist. In einer bevorzugten Ausführungsform weist die erfindungsgemäße Scannereinheit zwei Lichtquellen auf, die vorzugsweise beide so ausgerichtet sind, dass das Licht auf eine Lesezone des Produktes fällt. Die wenigstens eine Lichtquelle - oder im Falle des Vorhandenseins zweier oder mehr Lichtquellen - ist/sind vorzugsweise länglich ausgebildet, d.h. haben eine räumliche Erstreckung in einer Richtung, und zwar vorzugsweise im Wesentlichen parallel zu der räumlichen Erstreckung der Kennzeichnung in der Lesezone des Produkts, so dass ein schmaler Lichtstreifen vom Umlenkspiegel umgelenkt und von der Kamera optisch erfasst werden kann. Auf diese Weise wird die gesamte Kennzeichnung entlang des Lichtstreifens genügend ausgeleuchtet, um auch bei einer schnellen Bewegung der Produkte eine optische Erfassung der Kennzeichnung zu ermöglichen. Ein weiterer Vorteil der Anordnung der wenigstens einen Lichtquelle außerhalb des Gehäuses/der Gehäuse - gegenüber der kompakten Anordnung innerhalb desselben Gehäuses mit den anderen Einheiten der Scannereinheit- ist die Vermeidung von störender Wärme innerhalb des Gehäuses der Scannereinheit.

Die optischen Komponenten, insbesondere eine Kamera und/oder deren Sensor (vorzugsweise Zeilensensor) können dabei ebenso wie die Lichtquelle und der Umlenkspiegel justierbar, arretierbar oder um vorgebbare Achsen schwenkbar einstellbar sein. Die Einstellung aller justierbaren Komponenten erfolgt vorzugsweise durch eine oder mehrere Gehäuseöffnungen hindurch von außen, ohne dabei jedoch Licht hindurchzulassen. Hierzu können Stellschrauben, Rastmechanismen oder ähnliche Justiermittel dienen.

Der Kameraabschnitt weist vorzugsweise die Optik und die Elektronik der Kamera auf. Diese beinhalten ein Objektiv und einen Kamerasensor. Erfindungsgemäß können Kameras mit einem Zeilen- oder einem Flächensensor eingesetzt werden. Da jedoch Kameras mit einem Flächensensor relativ teuer sind, und auch bei der Aufzeichnung einer schmalen Kennzeichnung nicht unbedingt notwendig sind, werden Kameras mit Zeilensensoren, sogenannte Zeilenkameras bevorzugt. Hier wird das Bild eines Objekts zeilenweise durch Relativbewegungen zwischen Erfassungszeile und Objekt erfasst. Vorzugsweise weist der Kameraabschnitt eine Öffnung auf, so dass das vom Umlenkspiegel umgelenkte und durch den Verbindungsabschnitt geführte Licht von der Kamera erfasst werden kann.

Weiterhin weist die erfindungsgemäße Scannereinheit vorzugsweise einen Polarisationsfilter auf, der vorzugsweise zwischen dem Umlenkspiegel und dem Objektiv der Kamera angeordnet ist.

In einer weiteren Ausgestaltung der erfindungsgemäßen Scannereinheit ist es bevorzugt, dass sie einen Blendschutz aufweist. Der Blendschutz ist vorzugsweise am Umlenkabschnitt angebracht, da in dessen Öffnung das Licht von der Lesezone einfallen soll und deshalb die mindestens eine Lichtquelle in der Nähe des Umlenkabschnitts angebracht ist. Der Blendschutz soll verhindern, dass Bedienpersonal von der mindestens einen Lichtquelle geblendet wird. Die Größe des Blendschutzes - in Querrichtung Y - wird hierbei vorzugsweise in Abhängigkeit von der Breite eines zu beleuchtenden Transportsystems und/oder der Produktbreite gewählt. Die Größe des Blendschutzes - in Längsrichtung X - ist abhängig vom Winkel, mit dem das Licht von der mindestens einen Lichtquelle auf das Produkt trifft, und ist umso größer je stärker dieser Winkel von 90° abweicht.

In einer weiteren Ausgestaltung der erfindungsgemäßen Scannereinheit ist es bevorzugt, dass der Umlenkabschnitt mindestens eine, vorzugsweise werkzeuglos austauschbare, Schutzscheibe zum Schutz des Umlenkspiegels aufweist. Die Schutzscheibe deckt dabei die Öffnung des Umlenkabschnitts zur Außenseite des Gehäuses ab und ist transparent ausgebildet. Sie wird deshalb auch äußere Schutzscheibe genannt. Die äußere Schutzscheibe dient dazu, die Verschmutzung des Umlenkspiegels zu verhindern. Durch das Entnehmen der äußeren Schutzscheibe aus dem Umlenkabschnitt kann diese problemlos gereinigt werden, bevor sie wieder in den Umlenkabschnitt eingesetzt wird. Unterhalb der äußeren Schutzscheibe kann eine weitere (vorzugsweise nicht werkzeuglos austauschbare) Schutzscheibe angeordnet sein, die nach dem Entnehmen der äußeren Schutzscheibe gewährleistet, dass kein Schmutz in das Innere des Umlenkabschnitts, insbesondere auf den Umlenkspiegel, gelangen kann. Wird die äußere Schutzscheibe entfernt, so kann zum Schutz der weiteren Schutzscheibe eine Jalousie vor diese gefahren werden, die die weitere Schutzscheibe vor Verschmutzung schützt. Diese Jalousie wird vorzugsweise mechanisch bei der Entnahme der äußeren Schutzscheibe mit vor die weitere Schutzscheibe gezogen. Alternativ zur Entnehmbarkeit der äußeren Schutzscheibe kann auf diese auch eine entfernbare Folie aufgebracht sein, mit deren Entfernen auch der darauf befindliche Schmutz entfernt wird. In dem letztgenannten Fall kann auf eine weitere Schutzscheibe verzichtet werden. Die Intervalle der Reinigung der äußeren Schutzscheibe können beispielsweise von einer Software vorgegeben werden, oder in Abhängigkeit vom Grad der Verschmutzung, beispielsweise durch Auswertung der Qualität des aufgenommen Kamerabildes bestimmt werden. In letzterem Fall kann beispielsweise ein Warnsignal ausgegeben werden. Weiterhin ist es bevorzugt, dass ein Sensor das korrekte Einsetzen der äußeren Schutzscheibe detektiert, und nur dann einen Betrieb der Scannereinheit zulässt, vorzugsweise indem der Sensor die Funktion der gesamten Kameraanordnung freigibt. Letzteres kann entweder durch einen externen Sensor, der über die Kameraelektronik angebunden ist, oder durch Auswertung des Kamerabildes gewährleistet werden, die manuell, automatisch/periodisch oder in jedem aufgenommenen Bild vorgenommen werden kann. Der Start der Scannereinheit kann bei verschmutzter äußerer Schutzscheibe durch Ausgabe eines Warnsignals oder automatischer Unterbindung verhindert werden. Zur Verhinderung der Verschmutzung der Schutzscheibe vor herabfallendem Staub kann eine Elektrostatikeinheit zum Ablenken des Staubs oder eine Lufteinheit (Saugeinheit oder Blaseinheit) zum Ablenken des Staubs vorgesehen sein.

Vorzugsweise ist die austauschbare Schutzscheibe (äußere Schutzscheibe) in mindestens zwei Richtungen aus dem Umlenkabschnitt entnehmbar bzw. einführbar, und zwar in Querrichtung Y oder entgegen der Querrichtung Y, vorzugsweise durch Herausschieben oder Herausziehen.

In einer weiteren Ausgestaltung der erfindungsgemäßen Scannereinheit ist es bevorzugt, dass diese eine Vorrichtung zum Befestigen, vorzugsweise durch Anschrauben, an einer Inspektionsvorrichtung aufweist. Diese Vorrichtung zum Befestigen ist vorzugsweise am Gehäuse des Kameraabschnitts vorgesehen, und ist weiterhin vorzugsweise derart ausgebildet, dass alle Bestandteile der erfindungsgemäßen Scannereinheit, nämlich Kameraabschnitt, Verbindungsabschnitt, Umlenkabschnitt sowie gegebenenfalls die Lichtquelle und gegebenenfalls auch der Blendschutz mittels dieser Vorrichtung zum Befestigen des Kameraabschnitts an der Inspektionsvorrichtung befestigt sind.

Die vorliegende Erfindung betrifft auch eine Verwendung der erfindungsgemäßen Scannereinheit in einer Inspektionsvorrichtung zum Inspizieren der Kennzeichnung eines Produkts. In anderen Worten betrifft die vorliegende Erfindung auch ein Verfahren zum Inspizieren der Kennzeichnung eines Produkts in einer Inspektionsvorrichtung unter Verwendung der erfindungsgemäßen Scannervorrichtung, wobei die Scannervorrichtung die Kennzeichnung des Produktes optisch erfasst.

Die vorliegende Erfindung betrifft auch eine Inspektionsvorrichtung zum Inspizieren der Kennzeichnung eines Produkts mit einer erfindungsgemäßen Scannereinheit, wobei die Scannereinheit so angeordnet ist, dass sie eine Lesezone des Produkts optisch erfassen kann. Dabei weist die erfindungsgemäße Inspektionsvorrichtung vorzugsweise eine Förderanlage/Transporteinheit zum Fördern des Produkts auf. Dabei kann die Scannereinheit oberhalb, seitlich oder auch unterhalb der Förderanlage angebracht sein, und zwar in Abhängigkeit davon, auf welcher Seite sich die Kennzeichnung des Produktes befindet. Besonders bevorzugt ist die Scannereinheit so an der Förderanlage angeordnet, dass sie die Lesezone des Produkts durch einen Rollenspalt zwischen zwei Rollen der Förderanlage hindurch optisch erfasst.

Die vorliegende Erfindung wird nun anhand der folgenden Figuren näher erläutert:
- Fig. 1: zeigt eine erfindungsgemäße Scannereinheit ohne Blendschutz in Schrägsicht.
- Fig. 2: zeigt ebenso eine erfindungsgemäße Scannereinheit ohne Blendschutz in Schrägsicht.
- Fig. 3: zeigt ebenso eine erfindungsgemäße Scannereinheit mit Blendschutz in Schrägsicht.
- Fig. 4: zeigt eine Förderanlage mit einer erfindungsgemäßen Scannereinheit in Schrägsicht.
- Fig. 5: zeigt eine erfindungsgemäße Inspektionsvorrichtung mit einer erfindungsgemäßen Scannereinheit in Schrägsicht.
- Fig. 6: zeigt eine erfindungsgemäße Scannereinheit in Seitenansicht in der Querrichtung Y.
- Fig. 7: zeigt einen Schnitt durch eine erfindungsgemäße Scannereinheit entlang einer durch die Längsrichtung X und Höhenrichtung Z aufgespannten Ebene.
- Fig. 8: zeigt eine erfindungsgemäße Scannereinheit nach Fig. 7 mit einem Produkt auf zwei Förderbändern mit einem Rollenspalt, durch den die Lesezone des Produkts optisch detektiert wird.
- Fig. 9: zeigt eine erfindungsgemäße Scannereinheit in Draufsicht entgegen der Höhenrichtung Z.

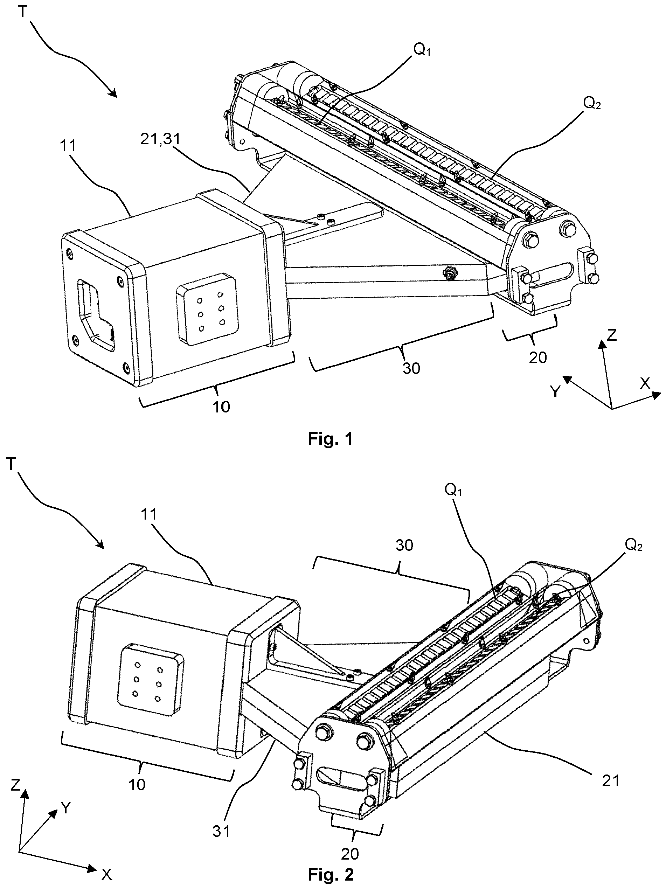

Fig. 1 und Fig. 2 zeigen jeweils eine erfindungsgemäße Scannereinheit T ohne Blendschutz B in Schrägsicht von schräg oben, die einen Kameraabschnitt 10, einen Umlenkabschnitt 20 und einen Verbindungsabschnitt 30 aufweist. Das Gehäuse 11 des Kameraabschnitts 10 weist eine Kamera K mit den erforderlichen optischen Komponenten, wie beispielsweise ein Objektiv O sowie einen Kamerasensor auf. Weiterhin ist seitlich an dem Gehäuse 11 (in der durch die Längsrichtung X und Höhenrichtung Z aufgespannten Ebene) des Kameraabschnitts 10 eine Befestigungsvorrichtung zur Befestigung der Scannereinheit T an einer Inspektionsvorrichtung vorgesehen. Weiterhin weist das Gehäuse 11 des Kameraabschnitts 10 Anschlussmöglichkeiten für die elektronischen Komponenten der Kamera K auf. Entlang der Längsrichtung X schließt benachbart der Verbindungsabschnitt 30 mit einem Gehäuse 31 des Verbindungsabschnitts 30 an. Weiterhin in Längsrichtung X anschließend ist benachbart zum Verbindungsabschnitt 30 der Umlenkabschnitt 20 vorgesehen. Wie in den Fig. 1 und Fig. 2 gezeigt sind der Verbindungsabschnitt 30 und der Umlenkabschnitt 20 in einem Gehäuse 21, 31 des Umlenkabschnitts 20/Verbindungsabschnitts 30 vorgesehen. Montiert an dem Umlenkabschnitt 20 befindet sich die mindestens eine Lichtquelle Q₁, hier jedoch so ausgebildet, dass zwei Lichtquellen Q₁, Q₂ vorliegen. Die Einheit mit den Lichtquellen Q₁, Q₂ ist vorzugsweise an dem Umlenkabschnitt durch Schrauben angebracht. Die mindestens eine Lichtquelle Q₁ (hier beide Lichtquellen Q₁, Q₂) sind vorzugsweise um eine Achse (hier parallel zu der Querrichtung Y) schwenkbar angeordnet, sodass sie flexibel zur entsprechenden Beleuchtung des Produktes P ausgerichtet werden kann. Wie in den Fig. 1 und Fig. 2 gezeigt ist das Gehäuse 11 des Kameraabschnitts 10 modular mit dem Gehäuse 21, 31 des Umlenkabschnitts 20/Verbindungsabschnitts 30 verbunden. Damit die Gehäuse 11 und 21, 31 miteinander stabil verbunden werden können, sind oberhalb und unterhalb des Gehäuses 21, 31 des Umlenkabschnitts 20/Verbindungsabschnitts 30 jeweils Verstrebungen vorgesehen, die mit den jeweiligen

Gehäusen 11 und 21, 31 verschraubt sind. Das Gehäuse 21,31 des Umlenkabschnitts 20/Verbindungsabschnitts 30 weist in Höhenrichtung Z (abgesehen von den Verstrebungen) eine konstante Höhe auf. Die Erstreckung des Gehäuses 21, 31 des Umlenkabschnitts 20/Verbindungsabschnitts 30 in Höhenrichtung Z ist geringer als die Erstreckung des Gehäuses 11 des Kameraabschnitts 10 in Höhenrichtung Z. Weiterhin ist es wie in Fig. 1 und Fig. 2 gezeigt ist es bevorzugt, dass die Gehäuseaußenkontur des Verbindungsabschnitts 30 in Bezug auf die Querrichtung Y hin zum Kameraabschnitt 10 abnimmt, und zwar vorzugsweise linear bzw. trapezförmig.

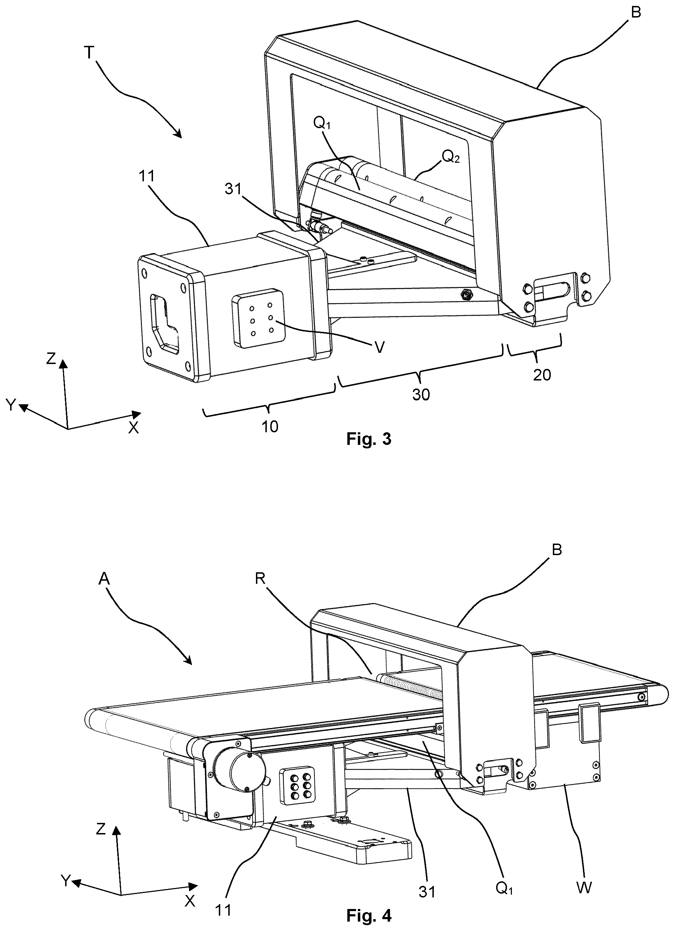

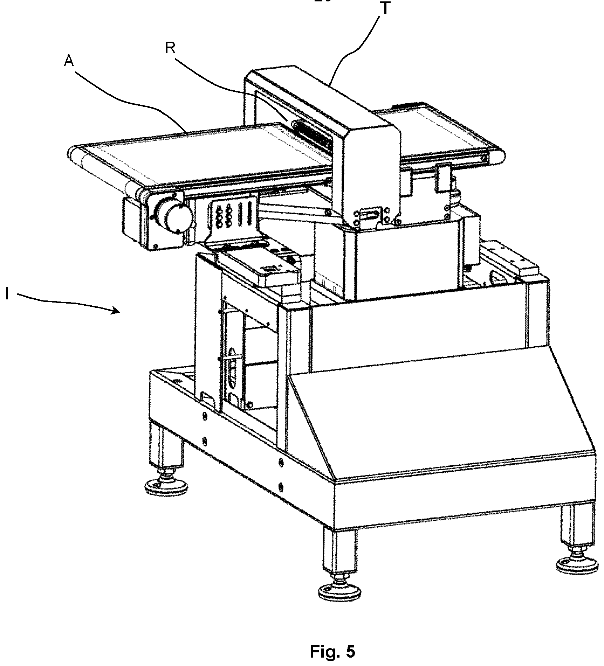

Fig. 3 zeigt wie Fig. 1 eine erfindungsgemäße Scannereinheit T mit Blendschutz B in Schrägsicht von schräg oben. Das von der mindestens einen Lichtquelle Q₁ (hier zwei Lichtquelle Q₁ und Q₂) im Wesentlichen in Höhenrichtung Z ausgestrahlte Licht wird durch den Blendschutz B in dieser Richtung abgeschirmt, damit Bedienpersonal der erfindungsgemäßen Scannereinheit T bzw. einer Inspektionseinheit I, die eine erfindungsgemäße Scannereinheit T enthält, nicht durch die mindestens eine Lichtquelle Q₁ geblendet wird. Wie insbesondere in Fig. 3 gesehen werden kann, weist die erfindungsgemäße Scannereinheit T vorzugsweise am Gehäuse 11 des Kameraabschnitts 10 eine Vorrichtungen V zum Befestigen der Scannereinheit T an einer Inspektionsvorrichtung I auf. Die Vorrichtung V zum Befestigen ist vorzugsweise so ausgebildet, dass die gesamte Scannereinheit T über diese Vorrichtung V zum Befestigen an der Inspektionsvorrichtung befestigt werden kann, insbesondere durch Verschrauben, wie bspw. in Fig. 5 ersichtlich.

Fig. 4 zeigt eine Förderanlage A mit einer erfindungsgemäßen Scannereinheit T gemäß der Fig. 3 in Schrägsicht. Die Scannereinheit T ist hier an eine Förderanlage A mit zwei benachbarten Förderbändern angebaut, wobei sich zwischen zwei benachbarten Rollen der Förderbänder ein Rollenspalt R befindet. Unterhalb der Förderbänder ist die Scannereinheit T derart angebracht, dass sich die Öffnung F_{U} des Umlenkabschnitts 20 unterhalb des Rollenspalts R befindet. Die Lichtquelle Q₁ ist derart positioniert, dass ein Produkt P, das sich über den Rollenspalt R bewegt, beleuchtet werden kann. Auf diese Weise kann eine Lesezone Z beleuchtet und die dort befindliche Kennzeichnung auf dem Produkt P optisch von der Scannereinheit T erfasst werden. Der Blendschutz B ist dabei so angebracht, dass er das von der Lichtquelle Q₁ durch den Rollenspalt R kommende Licht abschirmt. In Längsrichtung X hinter der Scannereinheit T kann sich eine Inspektionseinheit, die Teil einer Inspektionsvorrichtung I sein kann, befinden, die bspw. eine Wägeeinheit W sein kann. Fig. 5 zeigt eine solche gesamte Inspektionsvorrichtung I, die eine wie in Fig. 4 gezeigte Förderanlage A mit einer erfindungsgemäßen Scannereinheit T aufweist.

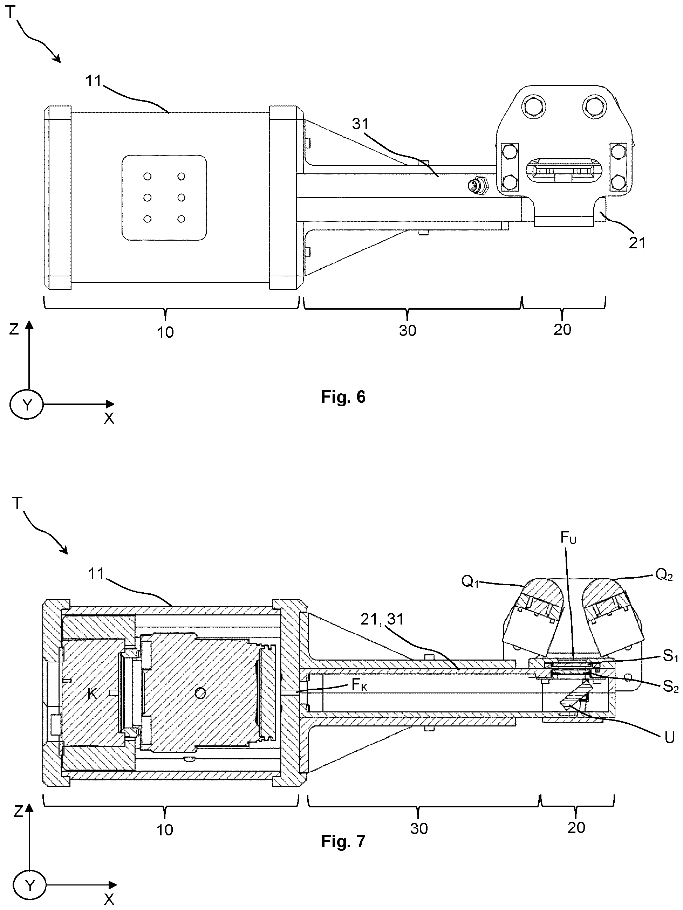

Fig. 6 zeigt eine erfindungsgemäße Scannereinheit T gemäß Fig. 1 und Fig. 2 in Seitenansicht in Querrichtung Y. Diese Ansicht zeigt deutlich die Anordnung des Kameraabschnitts 10, des Verbindungsabschnitts 30 und des Umlenkabschnitts 20 in der angegebenen Reihenfolge entlang der Längsrichtung X. Das Gehäuse 31 des Verbindungsabschnitts 30 ist hier mit dem Gehäuse 11 des Kameraabschnitts modular verbunden. Das Gehäuse 21 des Umlenkabschnitts 20 kann ein eigenes Gehäuse sein, das mit dem Gehäuse 31 des Verbindungsabschnitts 30 modular verbunden ist, oder kann zusammen mit dem Verbindungsabschnitt 30 in einem Gehäuse vorliegen.

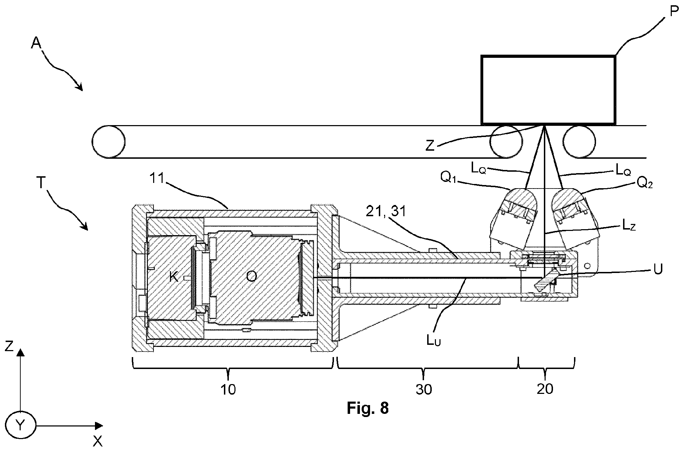

Fig. 7 und Fig. 8 zeigen jeweils einen Schnitt durch eine erfindungsgemäße Scannereinheit T entlang einer durch die Längsrichtung X und Höhenrichtung Z aufgespannten Ebene. Fig. 8 zeigt zusätzlich eine Förderanlage A mit einem Produkt P auf zwei entlang der Längsrichtung X benachbarten Förderbändern mit einem Rollenspalt (Bezugszeichen nur in Fig. 4 eingetragen), durch den die Lesezone Z des Produkts P optisch detektiert wird. Im Gehäuse 11 des Kameraabschnitts befindet sich eine Kamera K mit einem Objektiv O zur optischen Erfassung des vom Umlenkspiegel U umgelenkten und durch den Verbindungsabschnitt 30 zur Kamera K geführten Lichts Lu. Hierfür weist das Gehäuse 11 des Kameraabschnitts 10 eine Öffnung F_{K} auf durch die das Licht Lu treten kann. Der in Längsrichtung X an den Verbindungsabschnitt 30 anschließende Umlenkabschnitt 20 weist einen Umlenkspiegel U auf, der das von der Lesezone Z kommende Licht L_{Z} auf die Kamera K umlenkt. Die oberhalb des Umlenkabschnitts 20 (in Höhenrichtung Z) angebrachten Lichtquellen Q₁, Q₂ strahlen das auf das Produkt P gerichtete Licht L_{Q} aus. Zum Durchtritt des von der Lesezone Z kommenden Lichts Lz weist der Umlenkabschnitt 20 eine Öffnung Fu auf, die in Höhenrichtung Z gerichtet ist. Wie in Fig. 7 gezeigt, können sich in der Öffnung Fu des Umlenkabschnitts 20 eine austauschbare Schutzscheibe S₁ und eine entgegen der Höhenrichtung Z darunter befindliche fest integrierte Schutzscheibe S₂ befinden, die den Umlenkspiegel U vor herunterfallendem Schmutz oder Staub schützen können. Die austauschbare Schutzscheibe S₁ kann zu dessen Säuberung entnommen werden.

Damit auch während der Säuberung der austauschbaren Schutzscheibe S₁ kein Schmutz oder Staub auf den Umlenkspiegel gelangen kann, ist die fest integrierte Schutzscheibe S₂ vorhanden.

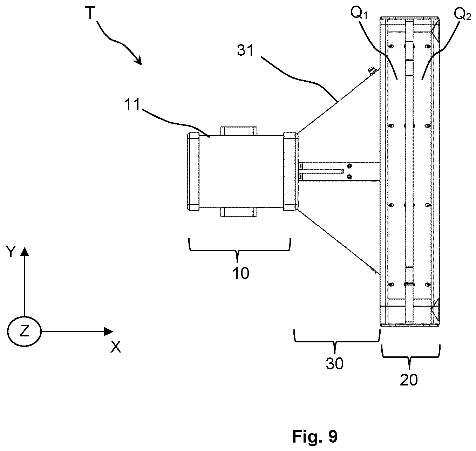

Die Fig. 9 zeigt eine erfindungsgemäße Scannereinheit T gemäß der Fig. 1 und Fig. 2 in Draufsicht entgegen der Höhenrichtung Z. Hier ist deutlich zu sehen, dass die Gehäuseaußenkontur des Verbindungsabschnitts 30 in Bezug auf die Querrichtung Y hin zum Kameraabschnitt 10 abnehmen kann, und zwar vorzugsweise linear bzw. trapezförmig. Weiterhin ist bevorzugt, dass die räumliche Erstreckung der Gehäuseaußenkontur des Kameraabschnitts 10 in Querrichtung Y geringer ist, als die Erstreckung des Gehäuses 31 des Verbindungsabschnitts 30 in Querrichtung Y benachbart zu dem Umlenkabschnitt 20.

### Liste der Bezugszeichen:

- T: Scannereinheit
- P: Produkt
- Q₁, Q₂: Lichtquellen
- 10: Kameraabschnitt
- 20: Umlenkabschnitt
- 30: Verbindungsabschnitt
- 11: Gehäuse des Kameraabschnitts
- 21: Gehäuse des Umlenkabschnitts
- 31: Gehäuse des Verbindungsabschnitts
- Z: Lesezone
- L_{Q}: auf das Produkt gerichtetes Licht
- L_{Z}: von der Lesezone kommendes Licht
- L_{U}: vom Umlenkspiegel umgelenktes und durch den Verbindungsabschnitt zur Kamera geführtes Licht
- U: Umlenkspiegel
- I: Inspektionsvorrichtung
- K: Kamera
- O: Objektiv
- Fu: Öffnung des Umlenkabschnitts
- F_{K}: Öffnung des Kameraabschnitts
- S₁: austauschbare Schutzscheibe
- S₂: feste integrierte Schutzscheibe
- B: Blendschutz
- A: Förderanlage
- R: Rollenspalt
- W: Wägeeinheit
- V: Vorrichtung zum Befestigen an einer Inspektionsvorrichtung

## Patentansprüche

1. Scannereinheit (T) zur optischen Erfassung der Kennzeichnung eines Produkts (P), wobei sich die Scannereinheit (T) in einer Längsrichtung X, einer dazu orthogonalen Querrichtung Y und einer zu diesen beiden Richtungen orthogonalen Höhenrichtung Z erstreckt, umfassend wenigstens eine Lichtquelle (Q₁, Q₂), einen Kameraabschnitt (10), einen Umlenkabschnitt (20) und einen Verbindungsabschnitt (30) zwischen dem Kameraabschnitt (10) und dem Umlenkabschnitt (20),
(a) wobei die wenigstens eine Lichtquelle (Q₁, Q₂) zum Aussenden eines auf das Produkt (P) gerichteten Lichtes (L_{Q}) dient, so dass das Licht (L_{Q}) auf eine Lesezone (Z) des Produkts (P) fällt;
(b) wobei der Umlenkabschnitt (20) einen Umlenkspiegel (U) aufweist, wobei der Umlenkspiegel (U) von der Lesezone (Z) kommendes Licht (Lz) durch den Verbindungsabschnitt (30) entgegen der Längsrichtung X zum Kameraabschnitt (10) umlenkt;
(c) wobei der Kameraabschnitt (10) eine Kamera (K) mit einem Objektiv (O) zur Erfassung des von dem Umlenkspiegel (U) umgelenkten und durch den Verbindungsabschnitt (30) zur Kamera (K) geführten Lichtes (Lu) aufweist;
**dadurch gekennzeichnet, dass**
der Kameraabschnitt (10) und der Verbindungsabschnitt (30) eine unterschiedliche Erstreckung in Bezug auf deren Gehäuseaußenkontur in Höhenrichtung Z aufweisen, wobei die Erstreckung des Verbindungsabschnitts (30) in Höhenrichtung Z wenigstens teilweise, vorzugsweise vollständig, geringer als die Erstreckung des Kameraabschnitts (10) in Höhenrichtung Z ist.

2. Scannereinheit (T) nach Anspruch 1, wobei der Kameraabschnitt (10), der Verbindungsabschnitt (30) und der Umlenkabschnitt (20) entweder ein gesamtmonolithisches Gehäuse (11, 21, 31) oder wenigstens zwei unterschiedliche, modular verbundene Gehäuse (11, 21, 31) aufweisen.

3. Scannereinheit (T) nach Anspruch 2, wobei die wenigstens eine Lichtquelle (Q₁, Q₂) außerhalb des gesamtmonolithischen Gehäuses (11, 21, 31) oder außerhalb der wenigstens zwei Gehäuse (11, 21, 31) angeordnet ist.

4. Scannereinheit (T) nach einem der Ansprüche 1 bis 3, wobei das von dem Umlenkspiegel (U) umgelenkte und durch den Verbindungsabschnitt (30) zur Kamera (K) geführte Licht (Lu) als Lichtstreifen vorliegt, der zumindest auf der dem Umlenkabschnitt (20) zugewandten Seite des Verbindungsabschnitts (30) eine größere räumliche Ausdehnung in der Querrichtung Y als in der Höhenrichtung Z aufweist.

5. Scannereinheit (T) nach einem der Ansprüche 1 bis 4, wobei die Erstreckung der Gehäuseaußenkontur des Verbindungsabschnitts (30) in Höhenrichtung Z unter Vernachlässigung etwaiger Verstrebungen im Wesentlichen konstant ist.

6. Scannereinheit (T) nach einem der Ansprüche 1 bis 5, wobei die Erstreckung der Gehäuseaußenkontur des Verbindungsabschnitts (30) in Querrichtung Y hin zu dem Kameraabschnitt (10), vorzugsweise linear, abnimmt, vorzugsweise derart, dass die Gehäuseaußenkontur des Verbindungsabschnitts (30) in Querrichtung Y im Wesentlichen dem Öffnungswinkel des Objektivs (O) der Kamera (K) entspricht.

7. Scannereinheit (T) nach einem der Ansprüche 1 bis 6, wobei der Umlenkabschnitt (20) eine Öffnung (F), die vorzugsweise spaltförmig ist, aufweist, die derart ausgestaltet ist, dass das von der Lesezone (Z) kommende Licht (Lz) auf den Umlenkspiegel (U) auftrifft, und wobei der Umlenkabschnitt (20) abgesehen von der Öffnung (F) lichtdicht abgeschlossen ist.

8. Scannereinheit (T) nach einem der Ansprüche 1 bis 7, wobei der im Umlenkabschnitt (20) vorhandene Umlenkspiegel (U) justierbar ist.

9. Scannereinheit (T) nach einem der Ansprüche 1 bis 8, wobei die wenigstens eine Lichtquelle (Q₁, Q₂) an dem Umlenkabschnitt (20) justierbar angeordnet ist.

10. Scannereinheit (T) nach einem der Ansprüche 1 bis 9, die einen Blendschutz (B) aufweist, der vorzugsweise am Umlenkabschnitt (20) angebracht ist.

11. Scannereinheit (T) nach einem der Ansprüche 1 bis 10, wobei der Umlenkabschnitt (20) mindestens eine, vorzugsweise werkzeuglos austauschbare, Schutzscheibe (S₁, S₂) zum Schutz des Umlenkspiegels (U) aufweist.

12. Verwendung der Scannereinheit (T) gemäß einem der vorherigen Ansprüche in einer Inspektionsvorrichtung (I) zum Inspizieren der Kennzeichnung eines Produkts (P).

13. Inspektionsvorrichtung (I) zum Inspizieren der Kennzeichnung eines Produkts (P) mit einer Scannereinheit (T) gemäß einem der vorherigen Ansprüche, wobei die Scannereinheit (T) so angeordnet ist, dass sie eine Lesezone (Z) des Produkts (P) optisch erfassen kann.

14. Inspektionsvorrichtung (I) nach Anspruch 13, die eine Förderanlage (A) zum Fördern des Produkts (P) aufweist, wobei die Scannereinheit (T) so angeordnet ist, dass sie die Lesezone (Z) des Produkts (P) durch einen Rollenspalt (R) zwischen zwei Rollen der Förderanlage (A) hindurch optisch erfasst.
